# EUROPÄISCHE PATENTANMELDUNG

(11) **EP 2 180 184 A2**
(43) Veröffentlichungstag der Anmeldung: **28.04.2010**
(21) Anmeldenummer: 09450136.8
(22) Anmeldetag: 29.07.2009
(51) Int. Cl.: F04B 35/04, F16F 15/073

(54) **Linearführung**

(30) Priorität: 29.07.2008 AT 11702008
(71) Anmelder: LINZ CENTER OF MECHATRONICS GMBH, 4040 Linz (AT)
(72) Erfinder: Dierneder, Stefan, 4331 Naarn (AT); Maier, Florian Dipl.-Ing. Dr. techn., 4060 Leonding (AT)
(74) Vertreter: Hübscher, Helmut

(57) **Zusammenfassung**

Es wird eine Linearführung mit wenigstens einem in Linearführungsrichtung (3) über zumindest eine Stelle (2) kraftbelasteten und zumindest über eine andere Stelle (4) fest eingespannten Biegeelement (1), das zwischen diesen Stellen (2 und 4) wenigstens zwei miteinander über einen Knotenpunkt (5) fest verbundene und in Längsrichtung zueinander geneigt, in einer Ebene verlaufende Balkenteile (6 und 7) aufweist, und mit einer am Biegeelement (1) angreifenden Abstützung gezeigt. Um vorteilhafte Führungsverhältnisse zu schaffen, wird vorgeschlagen, dass die Linearführung eine im Bereich des Knotenpunkts (5) der Balkenteile (6 und 7) derart angreifende Abstützung (8) aufweist, dass bei einer Kraftbelastung auf das Biegeelement (1) eine gegenüber der Ausgangslage (10) im wesentlichen kippfreie Lage (11) des abgestützten Bereichs (8) des Knotenpunkts (5) gewährleistet werden kann.

## Beschreibung

Des Weiteren ist aus der WO1982/04112A1 bekannt, ein Biegeelement aus zwei gleichen Y-förmigen Balkenteilen zu bilden, die untereinander liegend angeordnet und auf zwei gemeinsame Knotenpunkte zusammenlaufen. Im Knotenpunkt ist eine Abstützung vorgesehen, um ein weiteres Biegeelement anschließen zu können. Durch die untereinander liegenden Balkenteile kann zwar ein Kippen bzw. ein Verwölben der Balkenteile bei Linearbeanspruchung vermieden werden, so dass ein Übertragen dieser Kräfte von einem Balkenteil über die Knotenpunkte auf den anschließenden Balkenteil vermieden werden kann, hohe Hubamplituden sind durch solch ein Biegeelement jedoch nicht zu ermöglichen. Hinzu kommt, dass mit einer derartigen Balkenanordnung eine kompakte Linearführung nicht geschaffen werden kann.

Außerdem ist aus der US5139242A eine Linearführung mit einem Biegeelement bekannt, das ein im wesentlichen in einer Ebene verlaufendes ringförmiges Balkenteil aufweist, an den über Knotenpunkte innen liegende Balkenteile anschließen, die in Linearführungsrichtung kraftbelastet werden. An verformungsarmen Stellen des ringförmigen Balkenteils ist das Biegeelement fest eingespannt, wobei diese Stellen nicht bei den Knotenpunkten liegen. Hinzu kommt, dass am Biegeelement auch eine Abstützung zum Koppeln von weiteren Biegeelementen angreift. Nachteilig ist, dass im Wesentlichen die radial verlaufenden Balkenteile die mögliche Hubamplitude in Linearführungsrichtung bestimmen, was vergleichsweise gering ist. Derartige Biegeelemente können sohin keine vergleichsweise großen Hubamplituden gewährleisten.

Ausgehend vom eingangs geschilderten Stand der Technik hat sich die Erfindung die Aufgabe gestellt, eine kompakte Linearführung zu schaffen, die nicht nur eine exakte Führung sondern auch vergleichsweise große Hubamplituden gewährleisten kann. Außerdem soll die Linearführung einfach und kostengünstig herstellbar sein.

Die Erfindung löst die gestellte Aufgabe dadurch, dass die Abstützung im Bereich des Knotenpunkts der Balkenteile derart angreift, dass bei einer Kraftbelastung auf das Biegeelement eine gegenüber der Ausgangslage im wesentlichen kippfreie Lage des abgestützten Bereichs des Knotenpunkts gewährleistet ist.

Greift die Abstützung im Bereich des Knotenpunkts der Balkenteile derart an, dass bei einer Kraftbelastung auf das Biegeelement eine gegenüber der Ausgangslage im wesentlichen kippfreie Lage des abgestützten Bereichs des Knotenpunkts gewährleistet ist, dann wird es erfindungsgemäß möglich, mehrere zueinander geneigte Balkenteile in Serie zu schalten, um so für einen erhöhten Linearhub zu sorgen, ohne damit Nachteile bei der Genauigkeit bzw. Exaktheit der Linearführung in Kauf nehmen müssen. Mit der erfindungsgemäßen Abstützung kann nämlich sichergestellt werden, dass ein eventuelles Verdrehen bzw. Kippen eines der Balkenteile nicht auf andere über den Knotenpunkt verbundene Balkenteile wirkt, was diesen von zusätzlichen Belastungen bzw. Lageveränderungen freihält. Stellt nun beispielsweise der abgestützte Bereich des Knotenpunkts eine ebene Fläche dar, dann bedingt die Abstützung, dass bei jeglicher Kraftbelastung auf das Balkenteil der Normalvektor im abgestützten Knotenpunkt der Balkenteile im wesentlichen parallel zur Linearführungsrichtung verlaufend verbleibt. Die ebene Fläche kann daher nicht gegenüber seiner Ausgangslage kippen, sondern wird gemäß der aus den diversen Biegelinien der Balkenteile gebildeten Gesamtbewegung räumlich gesehen versetzt bewegt. Für einen Fachmann ist es klar, dass verschiedenste räumliche Verläufe beim abgestützten Bereich des Knotenpunkts denkbar sind. Ebenso ist der Knotenpunkt nicht als Punkt im speziellen sondern kann auch als Verbindungsbereich der angrenzenden Balkenteile im Allgemeinen verstanden werden. Wesentlich ist, dass eine gegenüber der Ausgangslage im wesentlichen kippfreie Lage des abgestützten Bereichs des Knotenpunkts gewährleistet werden kann, um so zu verhindern, dass Kipp- und/oder Schraubbewegungen der diversen Balkenteile die Linearführung beeinträchtigen können. Aus diesem Grund kann auch jeglicher geneigte Verlauf der Balkenteile für eine kompakte Bauweise des Biegeelements gewählt werden, was erfindungsgemäß technisch gegenläufige Konstruktionsmerkmale verbinden kann, nämlich mit einer kompakten Bauweise hohe Hubamplituden und eine exakte Linearführung zu gewährleisten. Das erfindungsgemäße, im wesentlichen in einer Ebene verlaufende Biegeelement zeichnet sich daher gegenüber den aus dem Stand der Technik bekannten, radial, spiralförmig oder mäanderförmig verlaufenden Biegeelementen besonders aus. Außerdem ist die erfindungsgemäße Lösung vergleichsweise einfach und kostengünstig herstellbar, weil die konstruktive Ausführung von Abstützungen einem Fachmann geläufig ist. Vorstellbar sind beispielsweise mit dem Biegeelement fest verbundene Abstützungen, die entsprechend der Biegebewegung mit dem Biegeelement mitbewegt werden und Kräfte für die geforderte kippfreie Lage abtragen. Ebenso sind berührungsfreie magnetische Abstützungen vorstellbar, die Stellkräfte bzw. Gegenkräfte auf den abgestützten Bereich des Knotenpunkts ausüben. Insbesondere kann sich die Erfindung weiter dadurch auszeichnen, wenn die Ausbildung der von der kraftbelasteten Stelle aus gesehene erste Abstützung keine seitliche Bewegung des Knotenpunkts zur Graden in Linearführungsrichtung zulässt.

Einfache Konstruktionsverhältnisse ergeben sich, wenn die Linearführung zwei zueinander in Linearführungsrichtung versetzt angeordnete Biegeelemente aufweist, wobei die die Biegeelemente verbindende Abstützung im Bereich des jeweiligen Knotenpunkts der Biegeelemente angreift. Bereits zwei Biegeelemente können dann zur Führung der Abstützung ausreichen, um damit die gegenüber der Ausgangslage im Wesentlichen kippfreie Lage des abgestützten Bereichs der jeweiligen Knotenpunkte zu sorgen, wobei die Abstützung beispielsweise als starrer Körper ausgebildet sein kann.

Schließen an einen abgestützten Knotenpunkt drei Balkenteile an, von denen die beiden an den Knotenpunkt anschließenden und außen verlaufenden Balkenteile gegenüber dem innen verlaufenden dritten Balkenteil spiegelsymmetrisch verlaufen, dann kann auf konstruktiv einfache Weise vermieden werden, dass Querbelastungen der anderen Balkenteile auf den innen verlaufenden Balkenteil wirken. Eventuelle Querbelastungen dieser Balkenteile heben sich nämlich im Knotenpunkt aufgrund der Symmetrieverhältnisse auf, so dass es vorteilhaft zu einer Verschiebung des Knotenpunkts entlang der Längsrichtung des innen verlaufenden dritten Balkenteils kommt.

Um ein besonders kompaktes Biegeelement zu schaffen, können zwei innen verlaufende Balkenteile über je einen Knotenpunkt an jeweils zwei außen verlaufende Balkenteile anschließen, welche außen verlaufende Balkenteile einen die inneren Balkenteile umschließenden Verbund ausbilden. Außerdem ergibt der umschließende Verbund vorteilhafte symmetrische Biegeverhältnisse für die Linearführung. Hinzu kommt, dass mit einem umschließenden Verbund auch eine vergleichsweise hohe radiale Steifigkeit des Biegeelements gewährleistet werden kann.

Um eine Streckung der Balkenteile zu vermeiden, kann erfindungsgemäß vorgesehen werden, dass das Biegeelement zwischen dessen kraftbelasteten und fest eingespannten Stellen wenigstens zwei abgestützte Knotenpunkte von mindestens drei Balkenteilen aufweist, die derart in Längsrichtung zueinander geneigt verlaufen, dass während der Kraftbelastung auf das Biegeelement der Normalabstand zwischen den beiden abgestützten Knotenpunkten, die jeweils an den kraftbelasteten oder fest eingespannten Balkenteil des Biegeelements anschließen, kleiner oder gleich dem Normalabstand dieser Knotenpunkte in der Ausgangslage ist. Außerdem kann damit eine vergleichsweise hohe Standzeit der Linearführung geschaffen werden, weil hinsichtlich der Beanspruchung vorteilhafte Biegeverhältnisse und damit verbundene vorteilhafte Spannungsverhältnisse in den Balkenteilen gegeben sind.

Liegen die Knotenpunkte zwischen den jeweiligen anschließenden Balkenteilen, die die entweder in Linearführungsrichtung kraftbelasteten oder fest eingespannten und innen verlaufenden Balkenteile umschließen, dann kann ein zusätzlicher Linearhub gewährleistet werden, ohne dass damit die Linearführung beeinträchtigt wird. Besondere Symmetrieverhältnisse ergeben sich, wenn die innen verlaufenden Balkenteile entweder in Linearführungsrichtung kraftbelastet oder fest eingespannten sind.

Um das Biegeelement hinsichtlich der Steifigkeiten zu optimieren, können die statischen Eigenschaften der jeweiligen an einen Knotenpunkt angrenzenden Balkenteile des jeweiligen Biegeelements derart festgelegt sein, dass in den jeweiligen Balkenteilen im Anschlussbereich des zugehörigen Knotenpunkts annähernd gleiche Biegespannungen auftreten.

In den Figuren ist der Erfindungsgegenstand anhand von Ausführungsbeispielen beispielsweise dargestellt. Es zeigen
- Fig. 1: eine Draufsicht auf ein Biegeelement einer Linearführung nach einer ersten Ausführungsform,
- Fig. 2: eine Seitenansicht auf das Biegeelement nach Fig. 1 in einer unbelasteten sowie in einer in Linearführungsrichtung kraftbelasteten Lage,
- Fig. 3: eine Draufsicht auf ein Biegeelement einer Linearführung nach einer zweiten Ausführungsform,
- Fig. 4: eine Draufsicht auf ein Biegeelement einer Linearführung nach einer dritten Ausführungsform,
- Fig. 5: eine dreidimensionale abgerissene Ansicht auf das Biegeelement der Fig. 4 samt Abstützung,
- Fig. 6: eine Draufsicht auf ein Biegeelement einer Linearführung nach einer vierten Ausführungsform,
- Fig. 7: eine Draufsicht auf ein Biegeelement einer Linearführung nach einer fünften Ausführungsform,
- Fig. 8: eine dreidimensionale Ansicht auf eine Linearführung mit zwei Biegeelementen nach Fig. 7,
- Fig. 9: und 10 dreidimensionale Ansichten auf ein verformtes Biegeelement in den diversen Endlagen der Linearführung nach Fig. 8 und
- Fig. 11: eine Draufsicht auf in Biegeelement einer Linearführung nach einer sechsten Ausführungsform.

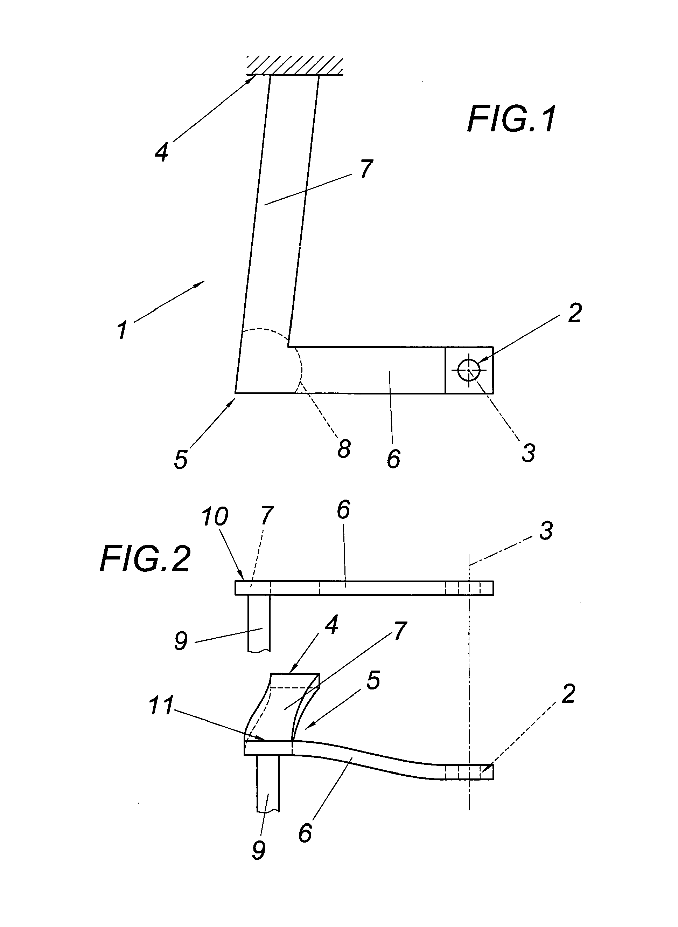

Gemäß dem ersten Ausführungsbeispiel nach Fig. 1 wird ein in einer Ebene verlaufendes Biegeelement 1 gezeigt, das über eine Stelle 2 in Linearführungsrichtung 3 kraftbelastet und über eine andere Stelle 4 fest eingespannt ist. Zwischen diesen Stellen 2 und 4 weist das Biegeelement 1 wenigstens zwei miteinander über einen Knotenpunkt 5 fest verbundene und in Längsrichtung zueinander geneigt verlaufende Balkenteile 6 und 7 auf. Damit ist ein kompaktes Biegeelement 1 geschaffen, mit dem auch ein vergleichsweise großer Linearhub gewährleistet werden kann. Wird das Biegeelement 1 in Linearführungsrichtung 3 kraftbelastet, dann kann es zu einem Ausweichen bzw. einem Kippen des Balkenteils 7 kommen, was eine exakte Linearführung beeinträchtigen kann. Erfindungsgemäß weist daher die Linearführung eine im Bereich 8 des Knotenpunkts 5 der Balkenteile 6 und 7 derart angreifende Abstützung 9 auf, dass bei einer Kraftbelastung auf das Biegeelement 1 eine gegenüber der Ausgangslage 10 im wesentlichen kippfreie Lage 11 des abgestützten Bereichs 8 des Knotenpunkts 5 gewährleistet werden kann. Die Abstützung 9 kann durch jegliche einem Fachmann bekannte Mittel ausgebildet werden. Vorstellbar sind fest verbundene Abstützungen 9, die entsprechend der Biegebewegung mit dem Biegeelement 1 mitbewegt werden und die geforderte kippfreie Lage 11 gewährleisten können. Ebenso sind magnetische Abstützungen vorstellbar, die Stellkräfte auf den abgestützten Bereich 8 des Knotenpunkts 5 ausüben. Wie der Fig. 2 entnommen werden kann, verwindet sich der in Linearführungsrichtung 3 kraftbelastete Balkenteil 7 leicht. Diese Verwindung hat jedoch durch die erfindungsgemäße Abstützung 9 keine Auswirkungen auf die Linearführung. Es können daher gegenüber dem Stand der Technik auch geneigt verlaufende Balkenteile 6 und 7 verwendet werden, um exakte Linearführungen mit vergleichsweise großen Linearhüben zu schaffen. Die Abstützung 9 kann so eine Bewegung des Knotenpunkts 5 auf einer gekrümmten Kurve ermöglichen, die mit der Geraden in Linearführungsrichtung 3 in einer gemeinsamen Ebene liegt. In anderen Worten, der Knotenpunkt 5 nähert sich durch die Kraftbelastung auf das Biegeelement 1 der Achse der Linearführungsrichtung 3 an.

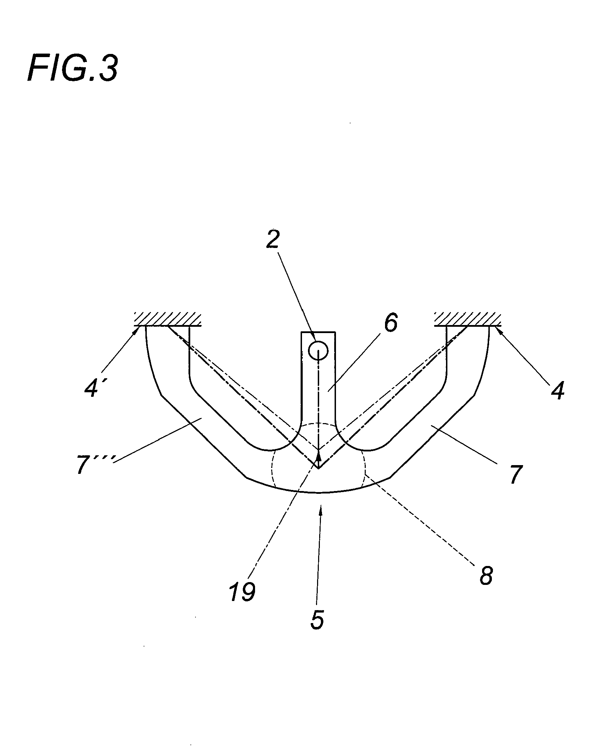

Nach Fig. 3 wird eine Draufsicht auf ein Biegeelement 1 einer Linearführung nach einer zweiten Ausführungsform gezeigt. Das Biegeelement 1 wird über die Stelle 2 in Linearführungsrichtung kraftbelastet und ist über zwei andere Stellen 4 und 4' fest eingespannt. An einen abgestützten Knotenpunkt 5 schließen drei Balkenteile 6, 7"' und 7 an. Die beiden an den Knotenpunkt 5 anschließenden und außen verlaufenden Balkenteile 7"' und 7 verlaufen gegenüber dem innen verlaufenden dritten Balkenteil 6 spiegelsymmetrisch, so dass es vorteilhaft lediglich zu einer Verschiebung des Knotenpunkts 5 entlang der Längsrichtung des innen verlaufenden dritten Balkenteils 6 kommt, was an Hand des Bezugszeichens 19 zu erkennen ist.

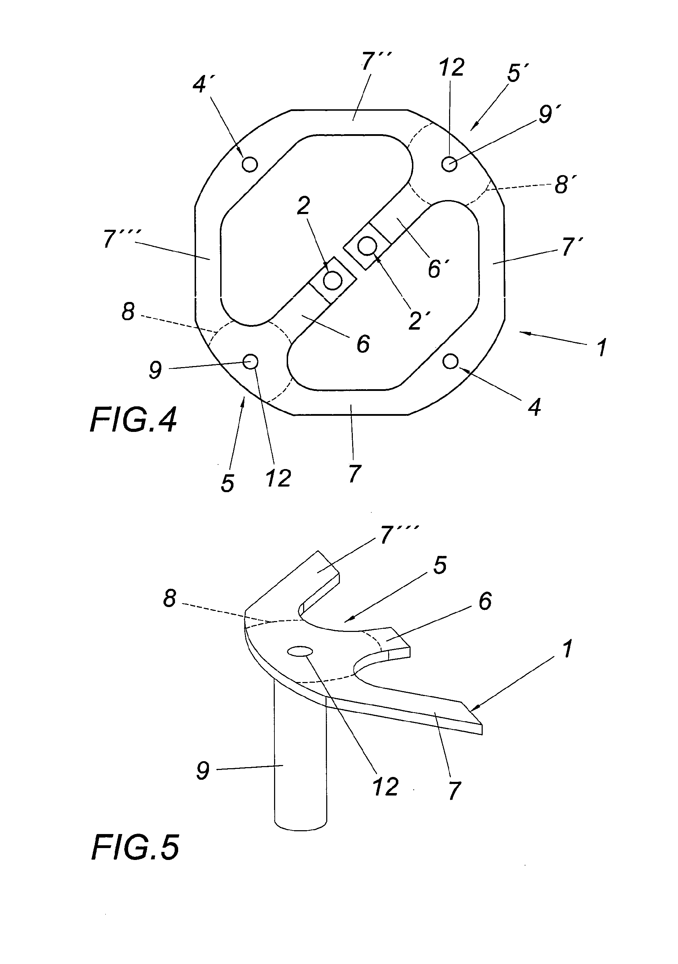

Gemäß Fig. 4 ist eine dritte Ausführungsform gezeigt, die im Wesentlichen eine spiegelsymmetrische Anordnung der zweiten Ausführungsform nach Fig. 3 darstellt. Hier schließen zwei innen und radial verlaufende Balkenteile 6 und 6' über je einen Knotenpunkt 5 bzw. 5' an jeweils zwei außen verlaufende Balkenteile 7, 7"' bzw. 7', 7" an. Die außen verlaufenden Balkenteile 7, 7" bzw. 7"', 7" bilden einen die inneren Balkenteile 6 und 6' umschließenden Verbund aus, was für eine besonders hohe radiale Steifigkeit sogt. Außerdem kann mit der symmetrischen Anordnung eine besonders exakte Linearführung geschaffen werden. Das Biegeelement 1 wird über zwei Stellen 2 und 2' in Linearführungsrichtung 3 kraftbelastet, und zwar werden dafür die radial verlaufenden Balkenteile 6, 6' herangezogen, wobei das Biegeelement 1 über zwei andere Stellen 4 und 4' fest eingespannt ist. Weiters weist dieses Biegeelement 1 zwei in den Bereichen 8 und 8' der Knotenpunkte 5 und 5' der Balkenteile 6, 7 und 7''' bzw. der Balkenteile 6', 7' und 7" angreifende Abstützungen 9 und 9' auf. Eine der Abstützungen 9, 9' wird gemäß Fig. 5 näher dargestellt. So ist im Biegeelement 1 eine Ausnehmung 12 vorgesehen, in die ein verjüngter Teil der Abstützung 9 eingreift und die Abstützung 9 mit dem Biegeelement 1 fest verbindet. Die Abstützung 9 liegt des Weiteren am Biegeelement 1 an. Die Abstützung 9 bewirkt einen abgestützten Bereich 8 des Knotenpunkts 5, wobei dieser Bereich 8 auch den gesamten Knotenpunkt 5 im Sinne des gesamten Anschlussbereichs der Balkenteile 6, 7, 7"' umfassen kann. Die Abstützung 9 wird mit dem Biegeelement 1 mitbewegt, so dass der Normalvektor im Knotenpunkt 5 im Wesentlichen stets parallel zur Linearführungsrichtung 3 verläuft. Andere als ebene Knotenpunktflächen sind denkbar, was jedoch nichts daran ändert, dass die Abstützung 9 eine gegenüber der Ausgangslage im Wesentlichen kippfreie Lage des abgestützten Bereichs 8 des Knotenpunkts 5 gewährleistet.

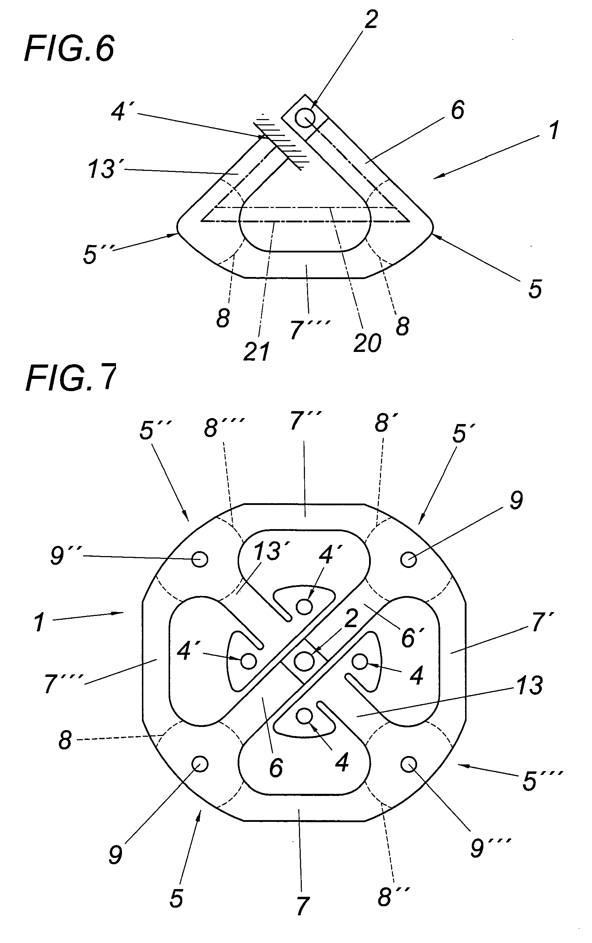

Fig. 6 zeigt eine weitere Ausführungsform eines Biegeelements 1. Das Biegeelement 1 weist zwischen dessen kraftbelasteten und fest eingespannten Stellen 2 und 4' wenigstens zwei abgestützte Knotenpunkte 5 und 5" von drei Balkenteilen 6, 7"' und 13' auf. Der Balkenteil 7"' bildet mit dem Balkenteil 6 bzw. 13' einen v-förmigen Verlauf aus, so dass während der Kraftbelastung auf das Biegeelement 1 der Normalabstand 20 zwischen den beiden abgestützten Knotenpunkten 5 und 5" kleiner dem Normalabstand 21 dieser Knotenpunkte 5 und 5" in der Ausgangslage ist. Damit kann ein Kippen des Balkenteils 7"' vermieden werden, da es zu einem Biegen und Verschieben des Balkenteils 7''' kommt, was eine vergleichsweise hohe Standzeit der Linearführung schafft, da hinsichtlich der Beanspruchungen der Balkenteile 6, 7"' und 13' vorteilhafte Biegeverhältnisse und damit verbundene vorteilhafte Spannungsverhältnisse gegeben sind.

Im Vergleich zum Biegeelement 1 nach Fig. 4 zeigt das Biegeelement 1 nach Fig. 7 zusätzlich zwei nach innen verlaufende Balkenteile 13 und 13', die an die Knotenpunkte 5" und 5"' anschließen. Die radial nach außen verlaufenden Balkenteile 6 und 6' sind in Linearführungsrichtung kraftbelastet, wobei die radial nach innen verlaufenden Balkenteile 13 und 13' an den Stellen 4 und 4' fest eingespannt sind.

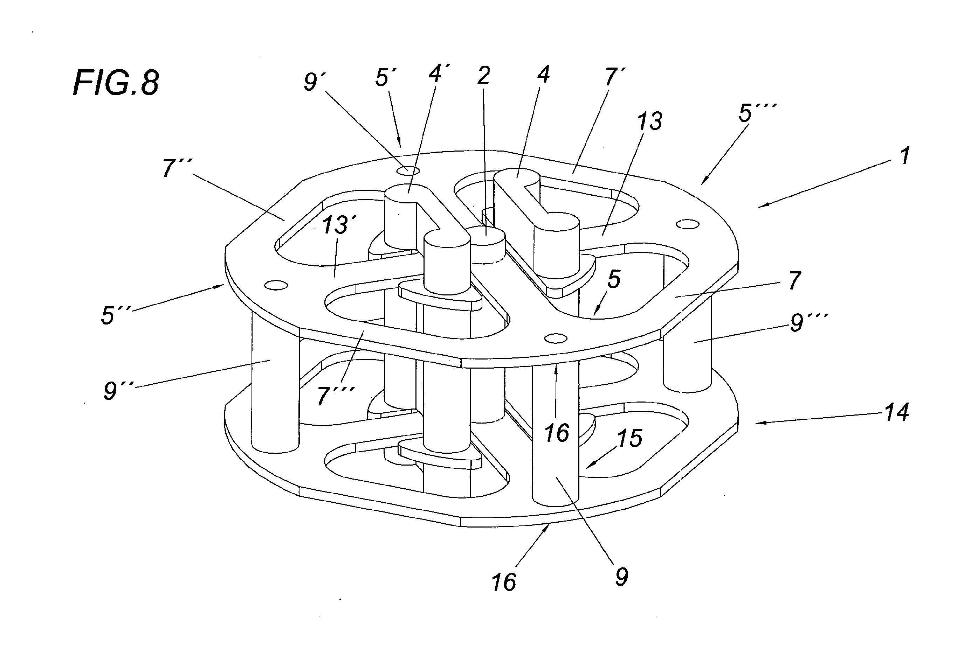

Gemäß Fig. 8 wird eine dreidimensionale Ansicht auf eine Linearführung mit zwei Biegeelementen 1 und 14 nach Fig. 7 gezeigt. Auf einfache konstruktive Weise verbindet die Abstützung 9 die zwei Knotenpunkte 5 und 15 der zwei zueinander vertikal versetzten Biegeelementen 1 und 14, um damit bei einer Kraftbelastung auf die Biegeelemente 1 und 14 eine gegenüber der Ausgangslage 16 im wesentlichen kippfreie Lage 17 des abgestützten Bereichs der Knotenpunkte 5 und 15 gewährleisten zu können. Der Übersichtlichkeit halber wird lediglich auf die Abstützung 9 verwiesen, wobei aufgrund Symmetrieverhältnisse klar ist, dass der Linearführung vier Abstützungen 9, 9', 9" und 9"" zugeordnet sind. Damit kann nicht nur eine kompakte Bauweise sondern auch eine hohe Hubamplitude sowie eine exakte Linearführung geschaffen werden.

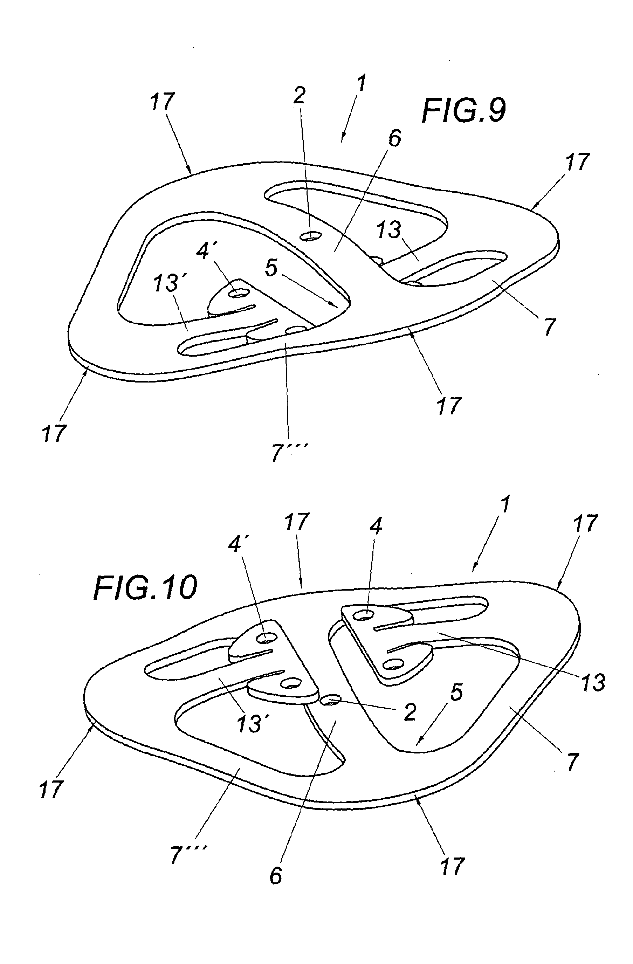

Die kippfreien Lagen 17 der abgestützten Bereiche kann insbesondere in den Figuren 9 und 10 erkannt werden. Hier wird beispielsweise eine dreidimensionale Ansicht auf ein verformtes Biegeelement 1 in den jeweiligen Endlagen bei der Linearführung nach Fig. 8 gezeigt. Wie diesen Figuren entnommen werden kann, haben beispielsweise Verwindungen der Balkenteile 7 und 7"' keinen Einfluss auf die Exaktheit der Linearführung, weil erfindungsgemäß beispielsweise die Verwindungskräfte über den Knotenpunkt 5 auf den Balkenteil 6 nicht weitergegeben werden können.

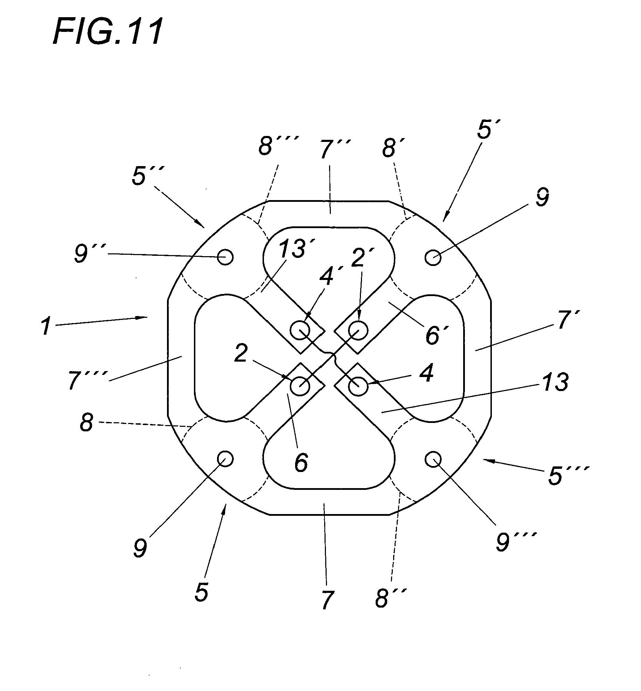

Nach Fig. 11 wird eine weitere Ausführungsform eines Biegelements gezeigt, das sich von der Ausführungsform nach Fig. 7 im Wesentlichen in den Balkenteilen 6, 6' bzw. 13, 13' unterscheidet. Durch die Gestaltung der Balkenteile 6, 6', 13 und 13' können besondere symmetrische Verhältnisse geschaffen werden.

## Patentansprüche

1. Linearführung mit wenigstens einem in Linearführungsrichtung (3) über zumindest eine Stelle (2) kraftbelasteten und zumindest über eine andere Stelle (4) fest eingespannten Biegeelement (1), das zwischen diesen Stellen (2 und 4) wenigstens zwei miteinander über einen Knotenpunkt (5) fest verbundene und in Längsrichtung zueinander geneigte und in einer Ebene verlaufende Balkenteile (6 und 7) aufweist, und mit einer am Biegeelement (1) angreifenden Abstützung, **dadurch gekennzeichnet, dass** die Abstützung im Bereich des Knotenpunkts (5) der Balkenteile (6 und 7) derart angreift, dass bei einer Kraftbelastung auf das Biegeelement (1) eine gegenüber der Ausgangslage (10) im wesentlichen kippfreie Lage (11) des abgestützten Bereichs (8) des Knotenpunkts (5) gewährleistet ist.

2. Linearführung nach Anspruch 1, **dadurch gekennzeichnet, dass** die Linearführung zwei zueinander in Linearführungsrichtung (3) versetzt angeordnete Biegeelemente (1, 14) aufweist, wobei die die Biegeelemente (1, 14) verbindende Abstützung (9) im Bereich des jeweiligen Knotenpunkts (5, 15) der Biegeelemente (1, 14) angreift.

3. Linearführung nach Anspruch 1 oder 2, **dadurch gekennzeichnet, dass** an einen abgestützten Knotenpunkt (5) drei Balkenteile (6, 7"' und 7) anschließen, von denen die beiden an den Knotenpunkt anschließenden und außen verlaufenden Balkenteile (7"' und 7) gegenüber dem innen verlaufenden dritten Balkenteil (6) spiegelsymmetrisch verlaufen.

4. Linearführung nach Anspruch 3, **dadurch gekennzeichnet, dass** zwei innen verlaufende Balkenteile (6, 6') über je einen Knotenpunkt (5, 5') an jeweils zwei außen verlaufende Balkenteile (7, 7"' bzw. 7', 7") anschließen, welche außen verlaufende Balkenteile (7 und 7" bzw. 7"', 7") einen die inneren Balkenteile (6, 6') umschließenden Verbund ausbilden.

5. Linearführung nach einem der Ansprüche 1 bis 4, **dadurch gekennzeichnet, dass** das Biegeelement (1) zwischen dessen kraftbelasteten und fest eingespannten Stellen (2, 4) wenigstens zwei abgestützte Knotenpunkte (5, 5") von mindestens drei Balkenteilen (6, 7"', 13') aufweist, die derart in Längsrichtung zueinander geneigt verlaufen, dass während der Kraftbelastung auf das Biegeelement (1) der Normalabstand (20) zwischen den beiden abgestützten Knotenpunkten (5, 5"), die jeweils am kraftbelasteten oder fest eingespannten Balkenteil (6 und 13) des Biegeelements (1) anschließen, kleiner oder gleich dem Normalabstand (21) dieser Knotenpunkte (5, 5") in der Ausgangslage ist.

6. Linearführung nach Anspruch 5, **dadurch gekennzeichnet, dass** die Knotenpunkte (5, 5', 5", 5"') zwischen den jeweiligen anschließenden Balkenteilen (7, 7', 7", 7"') liegen, die die entweder in Linearführungsrichtung (3) kraftbelasteten oder fest eingespannten und innen verlaufenden Balkenteile (6, 6', 13, 13') umschließen.

7. Linearführung nach einem der Ansprüche 1 bis 6, **dadurch gekennzeichnet, dass** die statischen Eigenschaften der jeweiligen an einen Knotenpunkt (5, 5', 5", 5"') angrenzenden Balkenteile (6, 6', 7, 7', 7", 7"', 13, 13') des jeweiligen Biegeelements (1) derart festgelegt sind, dass in den jeweiligen Balkenteilen (6, 6', 7, 7', 7", 7"', 13, 13') im Anschlussbereich des zugehörigen Knotenpunkts (5, 5', 5", 5"') annähernd gleiche Biegespannungen auftreten.
